# EUROPEAN PATENT APPLICATION

(11) **EP 4 324 794 A1**
(43) Date of publication of application: **21.02.2024**
(21) Application number: 22787826.1
(22) Date of filing: 09.02.2022
(51) Int. Cl.: C01G 53/00, H01M 4/52

(54) **POSITIVE ELECTRODE MATERIAL FOR NICKEL HYDROGEN SECONDARY BATTERY AND METHOD FOR PRODUCING POSITIVE ELECTRODE MATERIAL FOR NICKEL HYDROGEN SECONDARY BATTERY**

(30) Priority: 12.04.2021 JP 2021067321
(71) Applicant: Tanaka Chemical Corporation, Fukui-shi, Fukui 910-3131 (JP)
(72) Inventor: SATOMI, Naotoshi, Fukui-shi, Fukui 910-3131 (JP); HATA, Mikio, Fukui-shi, Fukui 910-3131 (JP); HANAMURA, Naoya, Fukui-shi, Fukui 910-3131 (JP)
(74) Representative: Weickmann & Weickmann PartmbB
(86) International application number: PCT/JP2022/005067
(87) International publication number: WO 2022/219898

(57) **Abstract**

A positive electrode material for a nickel metal hydride secondary battery and a method for producing the positive electrode material for a nickel hydrogen secondary battery, capable of improving characteristics of a nickel metal hydride secondary battery by lowering volume resistivity, are provided. The positive electrode material for a nickel metal hydride secondary battery has, in a differential pore distribution in which a pore diameter range is 1.7 nm or more and 300 nm or less, a local maximum value of a highest peak of a differential pore volume positioned in a range of a pore diameter of 1.7 nm or more and 10.0 nm or less.

## Description

### Technical Field

The present invention relates to a positive electrode material for a nickel metal hydride secondary battery and a method for producing the positive electrode material for a nickel hydrogen secondary battery, which has improved battery characteristics, such as utilization rate, by lowering volume resistivity.

### Background Art

In recent years, improvements in battery characteristics of secondary batteries such as nickel metal hydride secondary batteries, have been increasingly demanded attendant on enhanced functionality of equipment and the like. Therefore, in nickel hydroxide particles covered with a cobalt compound for positive electrode active materials of nickel metal hydride secondary batteries, a nickel-containing composite hydroxide particle with a higher cobalt content has been developed in order to improve battery characteristics.

Moreover, a covering layer with a cobalt compound is also formed on a nickel hydroxide particle in order to increase the cobalt content. As the nickel hydroxide particle having a covering layer of the cobalt compound formed thereon, for example, covered nickel hydroxide powder for positive electrode active materials of alkaline secondary batteries in which a particle surface of the nickel hydroxide powder is covered with cobalt oxyhydroxide or a cobalt compound composed mainly of a mixture of cobalt oxyhydroxide and cobalt hydroxide in order to improve battery characteristics by ensuring uniformity and adhesiveness of the covering layer, wherein the cobalt in the covering has a valence number of 2.5 or higher, and an amount of peeling of the covering is 20% by mass or less of the total covering amount when 20 g of the covered nickel hydroxide powder is shaken for 1 hour in an air-tight container, has been proposed (Patent Literature 1).

On the other hand, due to further enhanced functionality of equipment in which a secondary battery such as a nickel metal hydride secondary battery is mounted and the like, increasingly the mounted secondary battery needs to exhibit even better battery characteristics, such as a further improvement in utilization rate. In order to provide secondary batteries such as nickel metal hydride secondary batteries with even better battery characteristics, there has been room for improvement in electrical conductivity of the positive electrode active material contained in the positive electrode. Therefore, it is required that the positive electrode active material, which is a positive electrode material for secondary batteries such as nickel metal hydride secondary batteries, have even better electrical conductivity.

However, with a covered nickel hydroxide powder for a positive electrode active material of an alkaline secondary battery of Patent Literature 1, for example, the electrical conductivity of the covered nickel hydroxide may decrease when performing charge and discharge under high loads, and there has been room for improvement in improving in the electrical conductivity as a positive electrode material for a nickel metal hydride secondary battery.

### Document List

### Patent Literature

Patent Literature 1: Japanese Patent Application Publication No. 2014-103127

### Summary of Invention

### Technical Problem

In view of the circumstances described above, it is an object of the present invention to provide a positive electrode material for a nickel metal hydride secondary battery and a method for producing the positive electrode material for a nickel hydrogen secondary battery, capable of improving characteristics of a nickel metal hydride secondary battery by lowering volume resistivity.

### Solution to Problem

The gist of the configuration of the present invention is as follows:
[1] A positive electrode material for a nickel metal hydride secondary battery wherein, in a differential pore distribution having a pore diameter range of 1.7 nm or more and 300 nm or less, a local maximum value of a highest peak of a differential pore volume is positioned in a range of a pore diameter of 1.7 nm or more and 10.0 nm or less.
[2] The positive electrode material for a nickel metal hydride secondary battery according to [1], wherein a value of the differential pore volume at the local maximum value of the highest peak is 0.010 cm³/g or more and 0.050 cm³/g or less.
[3] The positive electrode material for a nickel metal hydride secondary battery according to [1], wherein a value of the differential pore volume at the local maximum value of the highest peak is 0.010 cm³/g or more and 0.030 cm³/g or less.
[4] The positive electrode material for a nickel metal hydride secondary battery according to any one of [1] to [3], wherein in the pore diameter range of 1.7 nm or more and 300 nm or less, a value of a cumulative average pore diameter obtained by a BJH adsorption method is 45.0 × 10⁻¹⁰ m or more and 75.0 × 10⁻¹⁰ m or less.
[5] The positive electrode material for a nickel metal hydride secondary battery according to any one of [1] to [3], wherein in the pore diameter range of 1.7 nm or more and 300 nm or less, a value of a cumulative average pore diameter obtained by a BJH adsorption method is 52.0 × 10⁻¹⁰ m or more and 75.0 × 10⁻¹⁰ m or less.
[6] The positive electrode material for a nickel metal hydride secondary battery according to any one of [1] to [5], which includes a nickel-containing hydroxide particle having a ratio by mole of nickel (Ni) : cobalt (Co) : additive metal element M, wherein M represents at least one metal element selected from the group consisting of zinc (Zn), magnesium (Mg), and aluminum (Al), of x : y : z, wherein 0.94 ≤ x ≤ 0.97, 0.00 ≤ y ≤ 0.02, 0.03 ≤ z ≤ 0.05, and x + y + z = 1.00.
[7] A positive electrode active material for a nickel metal hydride secondary battery, wherein a covering layer containing cobalt oxyhydroxide is formed on the positive electrode material for a nickel metal hydride secondary battery according to any one of [1] to [6].
[8] A method for producing a positive electrode material for a nickel metal hydride secondary battery, including:
   a coprecipitation step of obtaining a nickel-containing hydroxide particle by, while adjusting a pH value of a reaction system with an alkali metal hydroxide solution, adding a raw material solution containing nickel (Ni) and a complexing agent solution to the reaction system, wherein
   a ratio of a flow rate of the complexing agent solution to a flow rate of the alkali metal hydroxide solution is 0.20 or more and 0.65 or less, and a pH value of the reaction system at 40°C as a standard is 11.5 or more and 13.0 or less, and
   the raw material solution contains all of the metal elements constituting the nickel-containing hydroxide particle.
[9] The method for producing a positive electrode material for a nickel metal hydride secondary battery according to [8], wherein the complexing agent solution has a pH value of 2.0 or more and 7.0 or less at 40°C as a standard.
[10] The method for producing a positive electrode material for a nickel metal hydride secondary battery according to [8] or [9], wherein the alkali metal hydroxide solution has a pH value of 10.0 or more and 14.0 or less at 40°C as a standard.
[11] The method for producing a positive electrode material for a nickel metal hydride secondary battery according to any one of [8] to [10], wherein the raw material solution has a pH value of 2.0 or more and 5.0 or less at 40°C as a standard.
[12] The method for producing a positive electrode material for a nickel metal hydride secondary battery according to any one of [8] to [11], wherein the nickel-containing hydroxide particle obtained in the coprecipitation step is continuously recovered by causing the nickel-containing hydroxide particle to overflow from the reaction system.

In an aspect of [1] above, the "highest peak of a differential pore volume" refers to, in a case where there are a plurality of differential pore volume peaks in a differential pore distribution with pore diameter as the x-axis and differential pore volume as the y-axis, the peak having the largest local maximum value among the local maximum values of each of the peaks.

### Effects of Invention

According to the positive electrode material for a nickel metal hydride secondary battery of the present invention, a positive electrode material for a nickel metal hydride secondary battery with reduced volume resistivity can be obtained by positioning, in a differential pore distribution having a pore diameter range of 1.7 nm or more and 300 nm or less, the local maximum value of the highest peak of the differential pore volume in the range of a pore diameter of 1.7 nm or more and 10.0 nm or less. Therefore, by using the positive electrode material for a nickel metal hydride secondary battery of the present invention for a positive electrode, the characteristics of the nickel metal hydride secondary battery can be improved.

According to the positive electrode material for a nickel metal hydride secondary battery of the present invention, a positive electrode material for a nickel metal hydride secondary battery with reliably reduced volume resistivity can be obtained by setting the value of the differential pore volume at the local maximum value of the highest peak to 0.010 cm³/g or more and 0.050 cm³/g or less.

According to the positive electrode material for a nickel metal hydride secondary battery of the present invention, volume resistivity can be further reduced by setting the value of the differential pore volume at the local maximum value of the highest peak to 0.010 cm³/g or more and 0.030 cm³/g or less.

According to the positive electrode material for a nickel metal hydride secondary battery of the present invention, a positive electrode material for a nickel metal hydride secondary battery with reliably reduced volume resistivity can be obtained by setting, in the pore diameter range of 1.7 nm or more and 300 nm or less, a value of a cumulative average pore diameter obtained by a BJH adsorption method to 45.0 × 10⁻¹⁰ m or more and 75.0 × 10⁻¹⁰ m or less.

According to the positive electrode material for a nickel metal hydride secondary battery of the present invention, volume resistivity can be further reduced by setting, in the pore diameter range of 1.7 nm or more and 300 nm or less, a value of a cumulative average pore diameter obtained by a BJH adsorption method to 52.0 × 10⁻¹⁰ m or more and 75.0 × 10⁻¹⁰ m or less.

According to the method for producing the positive electrode material for a nickel metal hydride secondary battery of the present invention, a positive electrode material for a nickel metal hydride secondary battery with reliably reduced volume resistivity can be produced by setting the ratio of a flow rate of a complexing agent solution to a flow rate of an alkali metal hydroxide solution to 0.20 or more and 0.65 or less, setting a pH value of the reaction system at 40°C as a standard to 11.5 or more and 13.0 or less, and including all of the metal elements constituting the nickel-containing hydroxide particle in the raw material solution.

### Description of Embodiments

Hereinafter, a positive electrode material for a nickel metal hydride secondary battery of the present invention will be described in detail. The positive electrode material for a nickel metal hydride secondary battery of the present invention has a nickel-containing hydroxide particle. In addition, by forming a covering layer of a cobalt compound on the surface of the nickel-containing hydroxide particle, which is the positive electrode material for a nickel metal hydride secondary battery of the present invention, that is, by using a nickel-containing hydroxide particle covered with cobalt, the nickel-containing hydroxide particle can be used as a positive electrode active material for a nickel metal hydride secondary battery. From the above, the positive electrode material for a nickel metal hydride secondary battery of the present invention is a base material for the positive electrode active material for a nickel metal hydride secondary battery.

In the positive electrode active material for a nickel metal hydride secondary battery, the nickel-containing hydroxide particle, which is the positive electrode material for a nickel metal hydride secondary battery of the present invention, serves as a core particle. The core particle is covered with a layer of a cobalt compound (shell structure), for example, a layer of a cobalt compound in which cobalt mainly has a valence number of 3, which enables the core particle to be contained in the positive electrode as a positive electrode material for a nickel metal hydride secondary battery. An example of a cobalt compound in which cobalt has a valence number of 3 is cobalt oxyhydroxide. In this case, the positive electrode active material for a nickel metal hydride secondary battery has a covering layer in which a covering layer containing cobalt oxyhydroxide is formed on the positive electrode material for a nickel metal hydride secondary battery.

A shape of the nickel-containing hydroxide particle is not particularly limited, and the shape may be, for example, a substantially spherical shape. Moreover, the nickel-containing hydroxide particle is, for example, in the form of secondary particles formed from a plurality of primary particles. A covering layer of the cobalt compound of the nickel-containing hydroxide particle covered with cobalt may cover the entire surface of the nickel-containing hydroxide particle or may cover only a partial region of a surface of the nickel-containing hydroxide particle.

The positive electrode material for a nickel metal hydride secondary battery of the present invention has, in a differential pore distribution having a pore diameter range of 1.7 nm or more and 300 nm or less, a local maximum value of the highest peak of the differential pore volume positioned in the range of a pore diameter of 1.7 nm or more and 10.0 nm or less. In the present invention, the differential pore distribution is a pore distribution obtained by measuring the pore volume from the amount of adsorption/desorption of nitrogen gas to/from the positive electrode material. In addition, the differential pore volume of the differential pore distribution, which is an index relating to the degree of pore depth, tends to be deeper when the value of the differential pore volume is larger and shallower when the value of the differential pore volume is smaller.

By positioning the local maximum value of the highest peak of the differential pore volume in the range of a pore diameter of 1.7 nm or more and 10.0 nm or less in the differential pore distribution having a pore diameter range of 1.7 nm or more and 300 nm or less, a surface state of the positive electrode material for a nickel metal hydride secondary battery is suitably modified and a positive electrode material for a nickel metal hydride secondary battery with the volume resistivity reduced can be obtained. As a result, by using the positive electrode material for a nickel metal hydride secondary battery of the present invention for a positive electrode, it is possible to improve characteristics such as utilization rate of the nickel metal hydride secondary battery.

In the pore distribution measurement described above, when a differential pore distribution chart is obtained with the pore diameter on the x-axis and the differential pore volume on the y-axis, the positive electrode material for a nickel metal hydride secondary battery of the present invention has a local maximum value of the highest peak of the differential pore volume positioned in the range of a pore diameter of 1.7 nm or more and 10.0 nm or less. Therefore, for the positive electrode material for a nickel metal hydride secondary battery of the present invention, when there are a plurality of differential pore volume peaks, of those plurality of differential pore volume peaks, the local maximum value of the highest peak of the largest differential pore volume is positioned in the range of a pore diameter of 1.7 nm or more and 10.0 nm or less.

The value of the differential pore volume at the local maximum value of the highest peak is not particularly limited, but the lower limit value thereof is preferably 0.010 cm³/g from the viewpoint of obtaining a positive electrode material for a nickel metal hydride secondary battery with reliably reduced volume resistivity. On the other hand, from the viewpoint of obtaining a positive electrode material for a nickel metal hydride secondary battery with reliably reduced volume resistivity, the upper limit value of the value of the differential pore volume at the local maximum value of the highest peak is preferably 0.050 cm³/g, more preferably 0.040 cm³/g, and from the viewpoint that volume resistivity can be further reduced, the upper limit value is particularly preferably 0.030 cm³/g. The upper limit value and the lower limit value described above can be freely combined.

In the pore diameter range of 1.7 nm or more and 300 nm or less, the value of the cumulative average pore diameter obtained by the BJH adsorption method is not particularly limited, but from the viewpoint of obtaining a positive electrode material for a nickel metal hydride secondary battery with reliably reduced volume resistivity, the lower limit value thereof is preferably 45.0 × 10⁻¹⁰ m, more preferably 50.0 × 10⁻¹⁰ m, and from the viewpoint that volume resistivity can be further reduced, the lower limit value is particularly preferably 52.0 × 10⁻¹⁰ m. On the other hand, in the pore diameter range of 1.7 nm or more and 300 nm or less, from the viewpoint of obtaining a positive electrode material for a nickel metal hydride secondary battery with reliably reduced volume resistivity, the upper limit value of the cumulative average pore diameter obtained by the BJH adsorption method is preferably 75.0 × 10⁻¹⁰ m, and particularly preferably 70.0 × 10⁻¹⁰ m. The upper limit value and the lower limit value described above can be freely combined.

The composition of the positive electrode material for a nickel metal hydride secondary battery of the present invention is, for example, a nickel-containing hydroxide particles with a high nickel content, in which a ratio by mole of nickel (Ni) in all metal elements is 90 mol% or more. The specific composition of the positive electrode material for a nickel metal hydride secondary battery is, for example, a nickel-containing hydroxide particle having a ratio by mole of nickel (Ni) : cobalt (Co) : additive metal element M, where M represents at least one metal element selected from the group consisting of zinc (Zn), magnesium (Mg), and aluminum (Al), of x : y : z, where 0.94 ≤ x ≤ 0.97, 0.00 ≤ y ≤ 0.02, 0.03 ≤ z ≤ 0.05, and x + y + z = 1.00. Among these, M is preferably at least one metal element selected from the group consisting of zinc (Zn) and magnesium (Mg).

The volume resistivity of the nickel-containing hydroxide particle covered with cobalt that uses the positive electrode material for a nickel metal hydride secondary battery of the present invention as a core particle is, for example, 2.50 Ω·cm or less, more preferably 2.30 Ω·cm or less, and particular preferably 2.00 Ω·cm or less is. On the other hand, the lower limit value of the volume resistivity of the nickel-containing hydroxide particle covered with cobalt that uses the positive electrode material for a nickel metal hydride secondary battery of the present invention as a core particle is preferably as low as possible. The lower limit value of the volume resistivity of nickel-containing hydroxide particle covered with cobalt that uses the positive electrode material for a nickel metal hydride secondary battery of the present invention as a core particle is, for example, 0.50 Ω·cm. By improving the electrical conductivity of the positive electrode material for a nickel metal hydride secondary battery of the present invention, the electrical conductivity of the positive electrode active material is improved, which in turn improves characteristics such as utilization rate of the nickel metal hydride secondary battery containing the positive electrode active material.

A method for producing the positive electrode material for a nickel metal hydride secondary battery of the present invention will now be described in detail. The method for producing the positive electrode material for a nickel metal hydride secondary battery of the present invention has a coprecipitation step of obtaining a nickel-containing hydroxide particle by, while adjusting a pH value of a reaction system with an alkali metal hydroxide solution, adding a raw material solution containing nickel (Ni) and a complexing agent solution to the reaction system. Specifically, a nickel-containing hydroxide particle, which is a positive electrode material for a nickel metal hydride secondary battery, is produced by a coprecipitation method by adding a salt solution of metal elements including nickel as a raw material (for example, a sulfate solution containing nickel, an additive metal element M, and optionally cobalt as metal elements) and a complexing agent solution to a reaction tank, and reacting the metal elements including nickel with the complexing agent. The nickel-containing hydroxide particle can be obtained as a slurry suspension. As a solvent for the suspension of the nickel-containing hydroxide particle, for example, water is used.

The complexing agent is not particularly limited as long as the complexing agent can form a complex with ions of the metal elements including nickel, which is a raw material, in an aqueous solution, and examples thereof include, for example, ammonium ion-supplying bodies (such as ammonium sulfate, ammonium chloride, ammonium carbonate, and ammonium fluoride), hydrazine, ethylenediaminetetraacetic acid, nitrilotriacetic acid, uracildiacetic acid, and glycine. Further, a solution of an alkali metal hydroxide (for example, sodium hydroxide or potassium hydroxide) is added in order to adjust the pH value of the solution in the reaction tank in performing coprecipitation.

When the complexing agent and the alkali metal hydroxide are continuously supplied to the reaction tank in addition to the salt solution of the metal elements including nickel, which is the raw material, a nickel-containing hydroxide particle is produced by the crystallization reaction of the metal elements including nickel, which is the raw material.

In the method for producing a positive electrode material for a nickel metal hydride secondary battery of the present invention, during the crystallization reaction, the ratio of the flow rate of the complexing agent solution to the flow rate of the alkali metal hydroxide solution is controlled to be 0.20 or more and 0.65 or less, and the pH value of the reaction solution (mother liquor), which is the reaction system, in the reaction tank is controlled to be 11.5 or more and 13.0 or less at 40°C as a standard, respectively. Further, during the crystallization reaction, the salt solution of the metal elements including nickel, which is the raw material solution, contains all the metal elements that constitute the nickel-containing hydroxide particle. By the production method described above, a positive electrode material for a nickel metal hydride secondary battery with reduced volume resistivity can be produced.

The ratio of the flow rate of the complexing agent solution to the flow rate of the alkali metal hydroxide solution is not particularly limited as long as it is in the range of 0.20 or more and 0.65 or less. However, from the viewpoint of obtaining a positive electrode material for a nickel metal hydride secondary battery with reliably reduced volume resistivity, the lower limit value is preferably 0.21, and from the viewpoint of further reducing volume resistivity, 0.35 is more preferred, and 0.45 is particularly preferred. On the other hand, from the viewpoint of obtaining a positive electrode material for a nickel metal hydride secondary battery with reliably reduced volume resistivity, the upper limit value of the ratio of the flow rate of the complexing agent solution to the flow rate of the alkali metal hydroxide solution is preferably 0.63. The upper limit value and the lower limit value described above can be freely combined.

The pH value of the reaction solution in the reaction tank at 40°C as a standard is not particularly limited as long as it is in the range of 11.5 or more and 13.0 or less. However, from the viewpoint of obtaining a positive electrode material for a nickel metal hydride secondary battery with reliably reduced volume resistivity, the lower limit value is 11.8 is preferred, and from the point of further reducing the volume resistivity of the positive electrode material for a nickel metal hydride secondary battery, 12.0 is particularly preferred. On the other hand, from the viewpoint of obtaining a positive electrode material for a nickel metal hydride secondary battery with reliably reduced volume resistivity, the upper limit value of the pH value of the reaction solution in the reaction tank at 40°C as a standard is preferably 12.5. The upper limit value and the lower limit value described above can be freely combined.

The pH value of the complexing agent solution at 40°C as a standard is, for example, 2.0 or more and 7.0 or less. In addition, the concentration of the complexing agent in the complexing agent solution is, for example, 50 g/L or more and 150 g/L or less. Examples of the complexing agent solution include aqueous solutions of complexing agents.

The pH value of the alkali metal hydroxide solution at 40°C as a standard is, for example, 10.0 or more and 14.0 or less. In addition, the concentration of the alkali metal hydroxide in the alkali metal hydroxide solution is, for example, 300 g/L or more and 500 g/L or less. Examples of the alkali metal hydroxide solution include aqueous solutions of alkali metal hydroxides.

The pH value of the raw material at 40°C as a standard is, for example, 2.0 or more and 5.0 or less. In addition, the concentration of the metal elements including nickel in the raw material solution is 50 g/L or more and 150 g/L or less. Examples of the raw material solution include an aqueous solution of the metal elements including nickel.

Further, during the crystallization reaction, the substances in the reaction tank are appropriately stirred while controlling the temperature of the reaction tank to be in the range of, for example, 10°C to 80°C, and preferably 20°C to 70°C. Examples of the reaction tank include a continuous type which allows the produced nickel-containing hydroxide particles overflow for the purpose of separation. In this case, the nickel-containing hydroxide particles obtained in the coprecipitation process are continuously recovered by overflowing from the reaction system (reaction tank).

Further, as described above, during the crystallization reaction, the salt solution of the metal elements including nickel, which is the raw material solution, contains all of the metal elements constituting the nickel-containing hydroxide particle. Therefore, the metal elements that constitute the nickel-containing hydroxide particle are not added to the reaction tank in a state separated into a plurality of raw material solutions according to the metal species.

A method for producing the positive electrode active material that uses the positive electrode material for a nickel metal hydride secondary battery of the present invention will now be described. The method for producing the positive electrode active material that uses the positive electrode material for a nickel metal hydride secondary battery of the present invention includes a covering step of forming a covering layer containing cobalt on the positive electrode material, and, if necessary, a solid-liquid separation treatment step of obtaining a dry powder of nickel-containing hydroxide particles having a covering layer containing cobalt formed thereon, and an oxidation step of oxidizing the covering layer containing cobalt.

### <Covering Step>

In a covering step, to the suspension containing nickel-containing hydroxide particles, which is a positive electrode material for a nickel metal hydride secondary battery, were added a cobalt salt solution (such as, an aqueous solution of cobalt sulfate), an alkali solution (such as an aqueous solution of sodium hydroxide), and the above-described complexing agent (such as ammonium sulfate solution) while stirring with a stirrer, to form a covering layer composed mainly of a cobalt compound such that a valence number of cobalt is 2, such as cobalt hydroxide, on a surface of the nickel-containing hydroxide particle by neutralization crystallization. The pH in the step of forming the above-described covering layer is preferably maintained within the range of 9 to 13 at a liquid temperature of 25°C as a standard. The covering step above allows a nickel-containing hydroxide particle having a covering layer containing cobalt formed thereon to be obtained. The nickel-containing hydroxide particle having a covering layer containing cobalt formed thereon can be obtained as a slurry suspension.

### <Solid-Liquid Separation Treatment Step>

Moreover, between the covering step and an oxidation step, a solid-liquid separation treatment step of separating the suspension containing the nickel-containing hydroxide particle having a covering layer containing cobalt formed thereon into a solid phase and a liquid phase and drying the solid phase separated from the liquid phase may be performed. By performing the solid-liquid separation treatment step, a dry powder of nickel-containing hydroxide particles having a covering layer containing cobalt formed thereon can be obtained. In addition, before drying the solid phase, the solid phase may be washed with weak alkaline water, if necessary.

### <Oxidation Step>

Thereafter, an oxidation treatment is performed on the nickel-containing hydroxide particle having a covering layer containing cobalt formed thereon. Methods of the oxidation treatment include a method for adding an alkali solution such as a sodium hydroxide aqueous solution to the dried powder containing the nickel-containing hydroxide particles, mixing and heating them. The above-described oxidation treatment enables divalent cobalt in the nickel-containing hydroxide particle having a covering layer containing cobalt formed thereon to be oxidized to be cobalt oxyhydroxide that is trivalent cobalt. Oxidation of the divalent cobalt in the covering layer to cobalt oxyhydroxide enables the covering layer containing cobalt oxyhydroxide to be formed, and the nickel-containing hydroxide particle covered with cobalt, which is a positive electrode active material of a nickel metal hydride secondary battery, to be obtained.

A positive electrode containing the positive electrode active material that uses the positive electrode material for a nickel metal hydride secondary battery of the present invention and a nickel metal hydride secondary battery using the positive electrode will now be described. The nickel metal hydride secondary battery is provided with a positive electrode containing a positive electrode active material that uses the positive electrode material for a nickel metal hydride secondary battery of the present invention, a negative electrode, an alkaline electrolytic solution, and a separator.

The positive electrode is provided with a positive electrode collector and a positive electrode active material layer formed on a surface of the positive electrode collector. The positive electrode active material layer has the nickel-containing hydroxide particle covered with cobalt, a binder (binding agent), and, if necessary, a conductive assistant. The conductive assistant is not particularly limited as long as the conductive assistant can be used for a nickel metal hydride secondary battery, and, for example, metal cobalt, cobalt oxide, and the like can be used. The binder is not particularly limited, and examples thereof include polymer resins, such as, polyvinylidene fluoride (PVdF), butadiene rubber (BR), polyvinyl alcohol (PVA), and carboxymethyl cellulose (CMC), polytetrafluoroethylene (PTFE), and combinations thereof. The positive electrode collector is not particularly limited, and examples thereof include a perforated metal, an expanded metal, wire netting, a foam metal such as a foam nickel, a mesh-like metal fiber sintered body, a metal-plated resin sheet, a metal foil.

As a method for producing the positive electrode, for example, a positive electrode active material slurry is first prepared by mixing the nickel-containing hydroxide particle covered with cobalt, a conductive assistant, a binder, and water. Subsequently, the positive electrode collector is filled with the positive electrode active material slurry by a known filling method, and the positive electrode active material slurry is dried, and then rolled and fixed with a press or the like.

The negative electrode is provided with a negative electrode collector and a negative electrode active material layer containing a negative electrode active material, the layer formed on a surface of the negative electrode collector. The negative electrode active material is not particularly limited as long as the negative electrode active material is usually used, and, for example, a hydrogen storage alloy particle can be used. As the negative electrode collector, electrically conductive metal materials, such as nickel, aluminum, and stainless steel, which are the same materials as the positive electrode collector, can be used.

Moreover, if necessary, a conductive assistant, a binder, or the like may be further added in the negative electrode active material layer. Examples of the conductive assistant and the binder include the conductive assistants and the binders which are the same as those used in the positive electrode active material layer.

As a method for producing the negative electrode, for example, a negative electrode active material slurry is first prepared by mixing a negative electrode active material, water, and if necessary, a conductive assistant and a binder. Subsequently, the negative electrode collector is filled with the negative electrode active material slurry by a known filling method, and the negative electrode active material slurry is dried, and then rolled and fixed with a press or the like.

In the alkaline electrolytic solution, examples of the solvent include water, and examples of the solute to be dissolved in the solvent include potassium hydroxide and sodium hydroxide. The solutes may be used singly, or two or more thereof may be used together.

The separator is not particularly limited, and examples thereof include polyolefin nonwoven fabric, such as polyethylene nonwoven fabric and polypropylene nonwoven fabric, polyamide nonwoven fabric, and those obtained by having performed a hydrophilic treatment thereon.

### Examples

Hereinafter, Examples of the present invention will be described, but the present invention is not limited to these Examples unless deviating from the scope thereof.

### Example 1

Into an aqueous solution (raw material solution) obtained by dissolving nickel sulfate and zinc sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.46, and the resultant mixture was stirred continuously with a stirrer while the pH in the reaction tank was maintained at 12.1 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which zinc was solid-solubilized. The raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Example 2

Into an aqueous solution (raw material solution) obtained by dissolving nickel sulfate, cobalt sulfate, and magnesium sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.63, and the resultant mixture was stirred continuously with a stirrer while the pH in the reaction tank was maintained at 12.2 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which cobalt and magnesium were solid-solubilized. The raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Example 3

Into an aqueous solution (raw material solution) obtained by dissolving nickel sulfate, cobalt sulfate, and zinc sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.43, and the resultant mixture was stirred continuously with a stirrer while the pH in the reaction tank was maintained at 12.1 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which cobalt and zinc were solid-solubilized. The raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Example 4

Into an aqueous solution (raw material solution) obtained by dissolving nickel sulfate and zinc sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.38, and the resultant mixture was stirred continuously with a stirrer while the pH in the reaction tank was maintained at 12.1 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which zinc was solid-solubilized. The raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Example 5

Into an aqueous solution (raw material solution) obtained by dissolving nickel sulfate and zinc sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.21, and the resultant mixture was stirred continuously with a stirrer while the pH in the reaction tank was maintained at 11.8 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which zinc was solid-solubilized. The raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Comparative Example 1

Into an aqueous solution (first raw material solution) obtained by dissolving nickel sulfate and cobalt sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.34, aluminium sulfate aqueous solution (second raw material solution) was dropped in from a different position to that of the first raw material solution, and the resultant mixture was stirred continuously with a stirrer while the pH in the reaction tank was maintained at 12.2 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which cobalt and aluminum were solid-solubilized. The first raw material solution had a pH value of 3.0 at 40°C as a standard, the second raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Comparative Example 2

Into an aqueous solution (raw material solution) obtained by dissolving nickel sulfate and zinc sulfate in a predetermined ratio, an ammonium sulfate aqueous solution (complexing agent) and a sodium hydroxide aqueous solution were dropped so that a ratio of the flow rate of the ammonium sulfate aqueous solution to the flow rate of the sodium hydroxide aqueous solution was 0.10, and the resultant mixture was stirred continuously with a stirrer while the pH in the reaction tank was maintained at 11.3 at a liquid temperature of 40°C as a standard. A produced hydroxide was allowed to overflow from an overflow pipe of the reaction tank and was continuously taken out. Each treatment of washing with water, dehydration, and drying was performed on the hydroxide which was taken out to obtain a nickel-containing hydroxide particle, in which zinc was solid-solubilized. The raw material solution had a pH value of 3.0 at 40°C as a standard, the ammonium sulfate aqueous solution had a pH value of 7.0 at 40°C as a standard, and the sodium hydroxide aqueous solution had a pH value of 14.0 at 40°C as a standard.

### Preparation of Nickel-Containing Hydroxide Particle Covered with Cobalt

### Formation of Covering Layer Containing Cobalt

The thus-obtained nickel-containing hydroxide particle of the Examples and Comparative Examples was put into an alkali aqueous solution in a reaction tank in which pH was maintained in the range of 9 to 13 at a liquid temperature of 25°C as a standard with sodium hydroxide. After putting the nickel-containing hydroxide particle, a cobalt sulfate aqueous solution with a concentration of 90 g/L was dropped in while stirring the solution. A sodium hydroxide aqueous solution was dropped in appropriately during the dropping to maintain the pH of the solution in the reaction tank in the range of 9 to 13 at a liquid temperature of 25°C as a standard to form a covering layer of cobalt hydroxide on a surface of the hydroxide particle, thereby obtaining a suspension of a nickel-containing hydroxide particle covered with cobalt hydroxide.

### Oxidation Treatment of Nickel-Containing Hydroxide Particle Covered with Cobalt Hydroxide

The suspension of nickel-containing hydroxide particles covered with cobalt hydroxide thus obtained was subjected to a solid-liquid separation treatment, and the solid phase was dried to obtain a dry powder of nickel-containing hydroxide particles covered with cobalt hydroxide. The dry powder of nickel-containing hydroxide particles covered with cobalt hydroxide was heated to 120°C, and while stirring an oxidation treatment was performed by supplying a 48% by mass sodium hydroxide aqueous solution so that the weight ratio of the nickel-containing hydroxide particles covered with cobalt hydroxide and the alkaline solution was 1:0.10. In the oxidation treatment, the cobalt hydroxide in the covering layer of the nickel-containing hydroxide particles was oxidized to cobalt oxyhydroxide, in which cobalt has a valence number of 3.

### Solid-Liquid Separation and Drying Treatment

The oxidized nickel-containing hydroxide particles were washed with water, dehydrated, and dried to obtain nickel-containing hydroxide particles covered with cobalt.

### Evaluation Items

### (1) Measurement of Differential Pore Distribution

The average pore diameter and pore volume of the nickel-containing hydroxide particles of the Examples and Comparative Examples were measured based on a pore distribution obtained by measuring 88 points in a nitrogen adsorption method using a specific surface area/pore distribution measuring device (TriStar, manufactured by Shimadzu Corporation). The differential pore distribution in the pore diameter range of 1.7 nm or more and 300 nm or less was measured, and the pore diameter (unit: nm) where the local maximum value of the highest peak of the differential pore volume was positioned and the differential pore volume (unit: cm³/g) at the local maximum value of the highest peak were determined from the obtained pore distribution chart.

### (2) Cumulative Average Pore Diameter

The cumulative average pore diameter (unit: nm) of the nickel-containing hydroxide particles of the Examples and Comparative Examples in the pore diameter range of 1.7 nm or more and 300 nm or less was measured by the BJH adsorption method.

### (3) Volume Resistivity

The volume resistivity (Ω·cm) of nickel-containing hydroxide particles covered with cobalt obtained using the nickel-containing hydroxide particles of the Examples and Comparative Examples as a base material was measured under the following conditions by using a powder resistivity system (Loresta) MCP-PD51, manufactured by Mitsubishi Chemical Analytec Co., Ltd. A volume resistivity of 2.5 Ω·cm or less was designated to be "pass".
Probe used: Four-point probe
Electrode spacing: 3.0 mm
Electrode radius: 0.7 mm
Sample radius: 10.0 mm
Sample mass: 3.00 g
Applied pressure: 20 kPa

The results of the pore diameter (unit: nm) where the local maximum value of the highest peak of the differential pore volume is positioned, the differential pore volume (unit: cm³/g) at the local maximum value of the highest peak, and the cumulative average pore diameter are shown in Table 1 below, and the volume resistivity results are shown in Table 2 below.

**[Table 1]**

| | Pore diameter where local maximum value of highest peak is positioned | Differential pore volume at local maximum value of highest peak | Cumulative average pore diameter |
|---|---|---|---|
| Unit | nm | cm³/g | nm |
| Example 1 | 4,1 | 0,026 | 5,4 |
| Example 2 | 7,7 | 0,015 | 6,5 |
| Example 3 | 3,8 | 0,025 | 5,7 |
| Example 4 | 3,8 | 0,020 | 6,4 |
| Example 5 | 3,5 | 0,034 | 5,2 |
| Comparative Example 1 | 13,2 | 0,208 | 8,0 |
| Comparative Example 2 | 24,0 | 0,021 | 10,7 |

**[Table 2]**

| | Volume resistivity |
|---|---|
| Unit | Ω · cm |
| Example 1 | 0,9 |
| Example 2 | 1,1 |
| Example 3 | 1,4 |
| Example 4 | 1,3 |
| Example 5 | 2,3 |
| Comparative Example 1 | 56,1 |
| Comparative Example 2 | 3,0 |

From Tables 1 and 2 above, it was found that for the nickel-containing hydroxide particles covered with cobalt obtained using the nickel-containing hydroxide particles of Examples 1 to 5 as a base material in which the local maximum value of the highest peak of the differential pore volume in the differential pore distribution having a pore diameter range of 1.7 nm or more and 300 nm or less is positioned in the pore diameter range of 1.7 nm or more and 10.0 nm or less, volume resistivity was 2.5 Ω·cm or less, and so a nickel-containing hydroxide particle with reduced volume resistivity could be obtained. From Table 1, it was found that for the nickel-containing hydroxide particles of Examples 1 to 5, the value of the differential pore volume at the local maximum value of the highest peak was in the range of 0.010 cm³/g or more and 0.050 cm³/g or less, and the cumulative average pore diameter value was in the range of 45.0 × 10⁻¹⁰ m or more and 75.0 × 10⁻¹⁰ m or less (4.5 nm or more and 7.5 nm or less).

In particular, for the nickel-containing hydroxide particles covered with cobalt obtained using the nickel-containing hydroxide particles of Examples 1 to 4 as a base material in which the value of the differential pore volume at the local maximum value of the highest peak was in the range of 0.010 cm³/g or more and 0.030 cm³/g or less and the value of the cumulative average pore diameter was in the range of 52.0 × 10⁻¹⁰ m or more and 75.0×10⁻¹⁰ m or less (5.2 nm or more and 7.5 nm or less), volume resistivity was 1.4 Ω·cm or less, and so a nickel-containing hydroxide particle with a further reduced volume resistivity could be obtained.

In addition, the nickel-containing hydroxide particles of Examples 1 to 5 could be produced by using a raw material solution containing all of the metal elements constituting the nickel-containing hydroxide particle, by dropping sodium hydroxide aqueous solution and ammonium sulfate aqueous solution into the reaction tank while controlling the ratio of the flow rate of the ammonium sulfate aqueous solution to the flow rate of the sodium hydroxide aqueous solution to be in the range of 0.20 or more and 0.65 or less, and maintaining the pH in the reaction tank in the range of 11.5 or more and 13.0 or less at a liquid temperature of 40°C as a standard.

On the other hand, for the nickel-containing hydroxide particles covered with cobalt obtained using the nickel-containing hydroxide particles of Comparative Examples 1 and 2 as a base material in which the local maximum value of the highest peak of the differential pore volume was positioned at 13.2 nm, 24.0 nm, volume resistivity was 3.0 Ω·cm and 56.1 Ω·cm, respectively, and so a nickel-containing hydroxide particle with a reduced volume resistivity could not be obtained.

Further, the nickel-containing hydroxide particle of Comparative Example 1 was produced by dividing the raw material solution containing the metal elements constituting the nickel-containing hydroxide particle into a first raw material solution containing nickel and cobalt and a second raw material solution containing aluminum for addition to the reaction tank. In addition, the nickel-containing hydroxide particle of Comparative Example 2 was produced by maintaining the ratio of the flow rate of the ammonium sulfate aqueous solution to the flow rate of the sodium hydroxide aqueous solution to 0.10 and the pH in the reaction tank at 11.3 at a liquid temperature of 40°C as a standard.

### Industrial Applicability

The positive electrode material for a nickel metal hydride secondary battery of the present invention with reduced volume resistivity can improve the characteristics of a nickel metal hydride secondary battery, and therefore can be applied in, in particular, the field of nickel metal hydride secondary batteries mounted on devices having enhanced functionality.

## Claims

1. A positive electrode material for a nickel metal hydride secondary battery wherein, in a differential pore distribution having a pore diameter range of 1.7 nm or more and 300 nm or less, a local maximum value of a highest peak of a differential pore volume is positioned in a range of a pore diameter of 1.7 nm or more and 10.0 nm or less.

2. The positive electrode material for a nickel metal hydride secondary battery according to claim 1, wherein a value of the differential pore volume at the local maximum value of the highest peak is 0.010 cm³/g or more and 0.050 cm³/g or less.

3. The positive electrode material for a nickel metal hydride secondary battery according to claim 1, wherein a value of the differential pore volume at the local maximum value of the highest peak is 0.010 cm³/g or more and 0.030 cm³/g or less.

4. The positive electrode material for a nickel metal hydride secondary battery according to any one of claims 1 to 3, wherein in the pore diameter range of 1.7 nm or more and 300 nm or less, a value of a cumulative average pore diameter obtained by a BJH adsorption method is 45.0 × 10⁻¹⁰ m or more and 75.0 × 10⁻¹⁰ m or less.

5. The positive electrode material for a nickel metal hydride secondary battery according to any one of claims 1 to 3, wherein in the pore diameter range of 1.7 nm or more and 300 nm or less, a value of a cumulative average pore diameter obtained by a BJH adsorption method is 52.0 × 10⁻¹⁰ m or more and 75.0 × 10⁻¹⁰ m or less.

6. The positive electrode material for a nickel metal hydride secondary battery according to any one of claims 1 to 5, which comprises a nickel-containing hydroxide particle having a ratio by mole of nickel (Ni) : cobalt (Co) : additive metal element M, wherein M represents at least one metal element selected from the group consisting of zinc (Zn), magnesium (Mg), and aluminum (Al), of x : y : z, wherein 0.94 ≤ x ≤ 0.97, 0.00 ≤ y ≤ 0.02, 0.03 ≤ z ≤ 0.05, and x + y + z = 1.00.

7. A positive electrode active material for a nickel metal hydride secondary battery, wherein a covering layer containing cobalt oxyhydroxide is formed on the positive electrode material for a nickel metal hydride secondary battery according to any one of claims 1 to 6.

8. A method for producing a positive electrode material for a nickel metal hydride secondary battery, comprising:
a coprecipitation step of obtaining a nickel-containing hydroxide particle by, while adjusting a pH value of a reaction system with an alkali metal hydroxide solution, adding a raw material solution containing nickel (Ni) and a complexing agent solution to the reaction system, wherein
a ratio of a flow rate of the complexing agent solution to a flow rate of the alkali metal hydroxide solution is 0.20 or more and 0.65 or less, and a pH value of the reaction system at 40°C as a standard is 11.5 or more and 13.0 or less, and
the raw material solution contains all of the metal elements constituting the nickel-containing hydroxide particle.

9. The method for producing a positive electrode material for a nickel metal hydride secondary battery according to claim 8, wherein the complexing agent solution has a pH value of 2.0 or more and 7.0 or less at 40°C as a standard.

10. The method for producing a positive electrode material for a nickel metal hydride secondary battery according to claim 8 or 9, wherein the alkali metal hydroxide solution has a pH value of 10.0 or more and 14.0 or less at 40°C as a standard.

11. The method for producing a positive electrode material for a nickel metal hydride secondary battery according to any one of claims 8 to 10, wherein the raw material solution has a pH value of 2.0 or more and 5.0 or less at 40°C as a standard.

12. The method for producing a positive electrode material for a nickel metal hydride secondary battery according to any one of claims 8 to 11, wherein the nickel-containing hydroxide particle obtained in the coprecipitation step is continuously recovered by causing the nickel-containing hydroxide particle to overflow from the reaction system.
